# EUROPÄISCHE PATENTSCHRIFT

(11) **EP 0 601 316 B1**
(45) Veröffentlichungstag und Bekanntmachung des Hinweises auf die Patenterteilung: **09.07.1997**
(21) Anmeldenummer: 93117061.7
(22) Anmeldetag: 21.10.1993
(51) Int. Cl.: C05G 3/00, C05G 1/00, B01J 2/12, B01J 2/00

(54) **Düngergranulierverfahren**
Fertiliser granulating process
Procédé de granulation d'engrais

(30) Priorität: 10.12.1992 DE 9216527 U
(43) Veröffentlichungstag der Anmeldung: 15.06.1994
(73) Patentinhaber: Ebbert, Horst, D-42555 Velbert (DE); Kayser, Heinz, D-46286 Dorsten (DE)
(72) Erfinder: Ebbert, Horst, D-42555 Velbert (DE); Kayser, Heinz, D-46286 Dorsten (DE)
(74) Vertreter: Schulte, Jörg, Dipl.-Ing.

(56) Entgegenhaltungen:
- EP-A- 0 472 771
- CH-A- 423 838
- DE-U- 9 114 087

## Beschreibung

Die Erfindung betrifft ein Verfahren zur Herstellung eines Mehrphasendüngemittels aus Magmagestein, Rohbraunkohle und Kalk, wobei die einzelnen Komponenten gemahlen, vermischt und dann unter Zugabe des Kalkes pelletiert werden und bei dem die Pellets anschließend getrocknet werden.

Düngemittel sind organische und anorganische Stoffe, die dem Boden zur Verbesserung seiner Fruchtbarkeit und zur der gesetzten Pflanzen zugeführt werden. Durch beide Wirkungen kann der Pflanzertrag gesteigert werden. Nach der Herkunft werden wirtschaftseigener Dünger und Handelsdünger unterschieden, wobei man unter dem Wirtschaftsdünger vor allem das aus Stall, Kompost u.ä. stammende Material versteht. Über sie werden insbesondere auch Humusstoffe zugeführt, die u.a. auch das Wasserspeicherungsvermögen erhöhen. Sie enthalten auch beträchtliche Mengen an Pflanzennährstoffen. Der Wirtschaftsdünger ist in der Vergangenheit immer mehr durch den Handelsdünger verdrängt worden bzw. insbesondere Gülle u.ä. Düngematerialen fallen heutzutage in so großen Mengen an, daß sie ohne Gefährdung dem Boden nicht mehr zugesetzt werden können. Als Handelsdünger bezeichnet man alle im Handel befindlichen Düngemittel, besonders anorganische Salze, aber auch organische Stoffe wie beispielsweise Guano. Nachteil dieser Handelsdünger ist, daß mit ihnen nicht alle durch die Intensivierung der landwirtschaftlichen und forstwirtschaftlich Nutzungen dem Boden entnommenen Bestandteile wieder zugeführt werden können. Durch den intensiven Anbau werden insbesondere auch mineralische und biologische Abbaustoffe dem Boden durch das Abernten der Pflanzen entzogen. Über die üblichen Handelsdünger können diese aber dem Boden nicht wieder zugeführt werden.

Aus diesem Grunde ist ein sogenanntes biologisch reines Drei-Phasen-Naturstoff-Düngemittel mit einer mineralischen Komponente und einer organische Komponente entwickelt worden (DE-GM 91 14 087). Die mineralische Komponente in Form von Magmagestein und Rohbraunkohle wird gemahlen, woraufhin dann der Braunkohlestaub und der Magmagesteinsstaub gemischt und anschließend granuliert wird. Während des Granulierens bzw. Pelletierens wird Kalk zugegeben, um auf diese Art und Weise um den Kern aus Braunkohle- und Magmagesteinsstaub einen Überzug aus natürlichem Düngekalkmehl zu legen. Angestrebt wird eine Kalkmenge von 5 - 30 Gew.- %. Dabei hat sich herausgestellt, daß es schwierig ist, einen derartigen Aufbau zu sichern, bei dem es insbesondere darum geht, die Schale aus Düngekalkmehl und dabei wieder insbesondere Muschelkalkmehl immer in der notwendigen Dicke vorzugeben, um einen Kalkgewichtsanteil von 5 - 30 % zu erreichen. Untersuchungen haben ergeben, daß der Kalkanteil diesen Forderungen deutlich nicht genügt. Die Pellets werden anschließend 4 - 5 Stunden getrocknet, ggf. unter Zugabe von Warmluft, die Übergrößen zurückgeführt und dann verpackt. Aus der EP-A1 0472 771 ist ein Verfahren zur Herstellung eines Humusdüngemittels bekannt, bei dem verrottbare Materialien und Mineralstoffe nach der Zerkleinerung bzw. Vermahlung gemischt und dann verpackt werden. Wichtig ist hier die gezielte Zugabe der einzelnen Komponenten, wobei es sich lediglich um zwei Komponenten handelt, die offensichtlich nicht pelletiert und zusammengeführt werden sollen.

Der Erfindung liegt die Aufgabe zugrunde, ein Verfahren zur Herstellung eines Mehrkomponentenpellets zu schaffen, die einen Kalkgehalt von über 30 % und Pellets mit einer kompakten Außenschale bei insgesamt vereinfachter Verfahrensführung gewährleisten.

Die Aufgabe wird erfindungsgemäß dadurch gelöst, daß die Rohbraunkohle unter Erhalt des natürlichen Wassergehaltes erst unmittelbar vor dem Mischen gemahlen und anschließend unter Zumischung von gemahlenem Magmagestein und auch von Kalk mit über 30 Gew.-% zu dunkeln, feuchten Pellets geformt wird, woraufhin diese Pellets ihre Form erhaltend einem Pelletierteller übergeben und dort bis zum Eintreten eines Trocknungseffektes mit trockenem Kalk bestäubt werden.

Bei einem derartigen Verfahren wird zunächst einmal sichergestellt, daß der natürliche Wassergehalt der zum Einsatz kommenden Braunkohle erhalten bleibt, um dadurch die gleichmäßige Bildung von Pellets in einer dafür extra ausgebildeten Pelletiertrommel zu sichern. In dieser Pelletiertrommel werden Steinmehl, Frischkohle und Kalk in einer vorgegebenen Mischung zusammengeführt, um daraus dunkle, feuchte Pellets zu bilden, wobei die Gehalte dieser Pellets durch die Kalkzufuhr bereits so beeinflußt werden, daß im Endeffekt ein Anteil an Kalk im Gesamtkorn von über 30 % Bestandteilen Kalk und Magmagestein so miteingebunden werden, daß eine ausreichende Feuchtigkeit des Gesamtkorns immer noch gegeben ist. Die dunklen und feuchten Pellets werden dann über einen Kastenbeschicker schonend der Pelletiertrommel zugeführt, um hier wiederum aufgrund der noch vorhandenen Feuchte mit trockenem Muschelkalk bestäubt zu werden. Besonders vorteilhaft ist dabei, daß durch diese Verfahrensführung gleichzeitig ein Trocknungseffekt eintritt, so daß sich eine nachfolgende Trocknung in der Regel erübrigt. Der trockene Kalk nimmt die Restfeuchte aus dem dunklen und feuchten Pellet und bildet dann die vorteilhaft gleichmäßige und feste Umhüllung, so daß für die spätere Verwendung als Mehrphasendüngemittel eine optimale Ausgangsposition geschaffen ist. Der Kastenbeschicker, der die dunklen und feuchten Pellets von der Pelletiertrommel zum Pelletierteller transportiert, ist so ausgebildet, daß er diese Pellets schonend auch aufwärts transportieren kann.

Nach einer zweckmäßigen Weiterbildung ist vorgesehen, daß zur Gewährleistug einer gleichmäßigen Durchfeuchtung und insbesondere eines feuchten Außenmantels der Wassergehalt kontinuierlich überwacht und durch Zugabe von Wasser, Molke, Gülle oder Anregersubstrat während des Mischens und/oder der Förderung zum Bestäuben eingestellt wird. Hierdurch ist auch bei etwas zu geringem Wassergehalt die Sicherheit gegeben, daß eine immer gleichmäßige Durchfeuchtung, insbesondere aber eine feuchte Außenummantelung für die dunklen Pellets gewährleistet ist. Dies gilt auch dann, wenn die Pellets schon mit einer entsprechenden Menge an Kalk und Steinmehl angereichert sind. Statt Wasser kann auch Molke oder Gülle oder ein Anregersubstrat verwendet werden, um auf diese Art und Weise gleichzeitig eine zusätzliche Einflußnahme auf den zu regenerierenden Boden zu erreichen. Hiermit kann insbesondere einer Veränderung des Wassergehaltes der Rohbraunkohle entgegenwirkt werden.

Mit den Drei-Phasen-Pellets können zweckmäßigerweise auch Samen in den Boden eingetragen werden, wozu bei der Formung der dunklen, feuchten Pellets vorher vereinzelte Samen zugeführt werden. Hierdurch ist es möglich, gezielt den einzelnen Pellets entsprechend viele Samenkörner zuzuordnen. Diese Samenkörner werden in die einzelnen Pellets eingearbeitet, um sie später zusammen mit dem eigentlichen Kern mit der Kalkumhüllung zu versehen und entsprechend später in den Boden einzubringen.

Ohne Zufuhr von Energie wird ein Trocknen und Erhärten der Pellets erreicht, indem zur Erreichung des Trocknungseffektes trockener Muschelkalk unter gleichzeitigem Pelletieren auf die Pellets aufgestäubt wird. Der schon einmal ausgenutzte Wassergehalt der Rohbraunkohle wird auch für diesen weiteren Prozeß benutzt. Durch die Bestäubung dieser außen insbesondere noch feuchten Pellets im Pelletierteller mit trockenem Muschelkalk erübrigt in aller Regel eine weitere Trocknung. Der Kalk nimmt die Restfeuchte aus dem dunklen und feuchten Pellet und bildet dann die vorteilhaft gleichmäßige und feste Umhüllung. Eine quasi kontinuierlich zu betreibende Granulieranlage sieht einen oder mehrere, vorzugsweise zwei parallel geschaltete Pelletierteller vor, die wechselweise beschickt werden, so daß der Ausstoß der mit Kalk bestäubten bzw. mit einer entsprechenden Beschichtung versehenen Drei-Phasen-Pellets gewährleistet ist.

Die feuchten und dunklen Pellets müssen von der Pelletiertrommel zum eigentlichen Pelletierteller transportiert werden, wo sie ihre Endgestalt erhalten und insbesondere ihre Umhüllung aus Kalk. Um zu vermeiden, daß sie bei diesem Transport zerbröseln oder gar zerbrechen, andererseits aber eine ausreichende Menge der Pellets transportiert werden kann, sieht die Erfindung vor, daß die dunklen, feuchten Pellets einerseits und der zum trocknen verwendete Kalk andererseits gegen Fremdeinflüsse geschützt transportiert werden. Durch das geschlossene Gehäuse können Fremdeinflüsse wie beispielsweise Wind u.ä. ausgeschlossen werden. Vorteilhafterweise behalten dann die einzelnen Pellets auch die einmal vorgegebene Feuchte, so daß sie weiter einfacher verarbeitet werden können. Darüber hinaus bietet das geschlossene Gehäuse die Möglichkeit, auch gezielt eine bestimmte Temperatur o.ä. vorzuhalten. Denkbar ist es auch, daß das Gehäuse abgedichtet und im oberen Horizontalstück mit einem Vernebler ausgerüstet ist um den Pellets erfindungsgemäß Feuchtigkeit während der Zwischenförderung über Verhebeln zuzugeben. Dadurch kann den Pellets auch im nachhinein noch Feuchte zugeführt werden, wenn dies vor dem Bestäuben mit Kalk sich als zweckmäßig oder notwendig herausstellen sollte.

Es ist vorgesehen, daß der Pelletiertrommel eine Wasserwaage zugeordnet ist, die zusätzlich über Tankanschlüsse zu einem Tank mit Anreger- oder Güllefüllung verfügt. Über die Wasserwaage wird die gleichmäßige Zugabe von Wasser in die Pelletiertrommel gesichert und eingestellt, so daß eine immer gleichmäßige Durchfeuchtung, insbesondere aber eine feuchte Außenummantelung der dunklen Pellets gewährleistet ist. Dies gilt auch dann, wenn die Pellets schon mit einer entsprechenden Menge an Kalk und Steinmehl angereichert sind. Statt Wasser kann auch Molke oder Gülle oder ein Anregersubstrat verwendet werden. Über die Wasserwaage ist es möglich, die jeweils notwendige Zugabemenge an Wasser genau zu dosieren und einzuhalten, wenn sich einmal herausstellen sollte, daß der Wassergehalt insbesondere der Rohbraunkohle variiert oder aber entsprechende Anlaufschwierigkeiten vorhanden sind, die zunächst einmal durch entsprechende Zugabe von Wasser oder Flüssigkeit beeinflußt werden müssen. Dabei erfolgt die notwendige Feineinstellung dadurch, daß auch der Wassergehalt der Rohbraunkohle im Silo überwacht wird. Durch einen Feuchtefühler kann die Feuchtigkeit der im Silo vorhandenen Rohbraunkohle genau vorgehalten werden, so daß rechtzeitig die Zugabemenge an Wasser bzw. Feuchtigkeit in die Pelletiertrommel veranlaßt und variiert werden kann.

Einerseits ist es wichtig, daß immer die notwendige Feuchtigkeit zur Verfügung gestellt wird bzw. daß sie eingehalten wird, um solche Pellets zu erzeugen, die dann anschließend auch mit einer ausreichend dicken Muschelkalkumhüllung versehen werden können; andererseits ist es von Vorteil, wenn der Kern auch die jeweilig optimale Mischung erhält, die für den jeweiligen Einsatzzweck notwendig ist. Um dieses zu gewährleisten, ist vorgesehen, daß die vorgegebene Mischung über eine als Turbomischer ausgelegte Waage eingehalten wird. Der Turbomischer ist über die den einzelnen Silos zugeordneten Förderschnecken zu beschicken. Die bezüglich der Geschwindigkeit einstellbaren Förderschnecken fördern dann nach Programm oder nach entsprechender sonstiger Vorgabe entsprechende Mengen an Braunkohle bzw. Rohbraunkohle, Gesteinsmehl und Kalk in den Turbomischer, um sie dann der Pelletiertrommel zu übergeben, um daraus wiederum schwarze oder besser gesagt dunkle Pellets zu erzeugen.

Die mit Kalk umhüllten Pellets haben nach Verlassen des Pelletiertellers eine vorteilhafte Festigkeit, weil der Kalk den einzelnen Pellets die Feuchtigkeit weitgehendst entzogen hat und sich dabei selber vorteilhaft verfestigt. Dabei ist von Vorteil, wenn die noch "warmen" Pellets dann ihre Form wahrend weiterbehandelt werden. Der Förderer zwischen Pelletierteller und Siebmaschine ist dazu als Kastenbeschicker mit stufenlos schaltbarem Antrieb ausgebildet. Über den Kastenbeschicker werden die jetzt weißen Pellets schonend angehoben. Sie werden dann nach dem Trocknen mit Kalk abgesiebt und in Auslaufkorn, Überkorn und Feinstkorn getrennt, woraufhin das Überkorn und auch das Feinstkorn zerkleinert und als Ausgangsprodukt eingesetzt werden. In einer der Siebmaschine nachgeschalteten Absackanlage steht ein weitgehendst homogenes Auslaufkorn bzw. Pellet für den Verbraucher zur Verfügung. Während des Zwischentransportes der Pellets kann, wenn notwendig, eine ergänzende Trocknung vorgenommen werden, wozu sich das geschlossene Gehäuse des Förderers bestens eignet. Vorteilhafterweise werden die beiden Kornbereiche abgetrennt, die die Qualität stark mindern und die andererseits erneut in den Herstellungsprozeß problemlos eingeschleußt werden können, weil das Überkorn und das Feinstkorn Ursprungsbestandteile aufweisen, die sich optimal weiter vermischen und verarbeiten lassen.

Die Erfindung zeichnet sich insbesondere dadurch aus, daß ein Verfahren geschaffen ist, daß sich insbesondere für die Verarbeitung bzw. die Herstellung von Mehrphasendüngemittel in Kornform eignet. Die noch feuchte Rohbraunkohle wird gezielt erst an bzw. in der Granulieranlage zerkleinert, so daß die Feuchte für den weiteren Prozeß ausgenutzt werden kann. Notwendig werdende Wasserzugaben erfolgen im ersten Misch- und Kornbildungsbereich, nämlich in der Pelletiertrommel. Danach werden die feuchten und dunkeln Pellets weiterbefördert und auf den Pelletiertellern mit einer Kalkumhüllung versehen, so daß das Korn bzw. das Pellet beim Verlassen der Anlage einen Durchschnittskalkanteil von über 30 % aufweist. Durch den hohen CaO-Anteil kann das Produkt im Rahmen der Düngemittelverordnung als Rückstandskalk angesprochen werden. Besonders vorteilhaft wirkt sich dabei der hohe Kalkanteil und auch der Gehalt an Kieselsäure aus, der durch die zum Einsatz kommenden Mischprodukte erreicht wird. Dadurch werden vorteilhaft gleichmäßige Pellets mit einer vorteilhaft gleichmäßig dicken und harten Außenumhüllung und mit einem hohen Kalkanteil geschaffen.

Das erfindungsgemäße Verfahren wird anhand der nachfolgenden Beschreibung der zugehörigen Zeichnung weiter erläutert, in der ein bevorzugtes Ausführungsbeispiel mit den notwendigen Einzelheiten und Einzelteilen dargestellt ist. Es zeigen :
- Fig. 1: eine Seitenansicht der Granulieranlage und
- Fig. 2: eine Draufsicht jeweils in etwas schematisierter Ausführung.

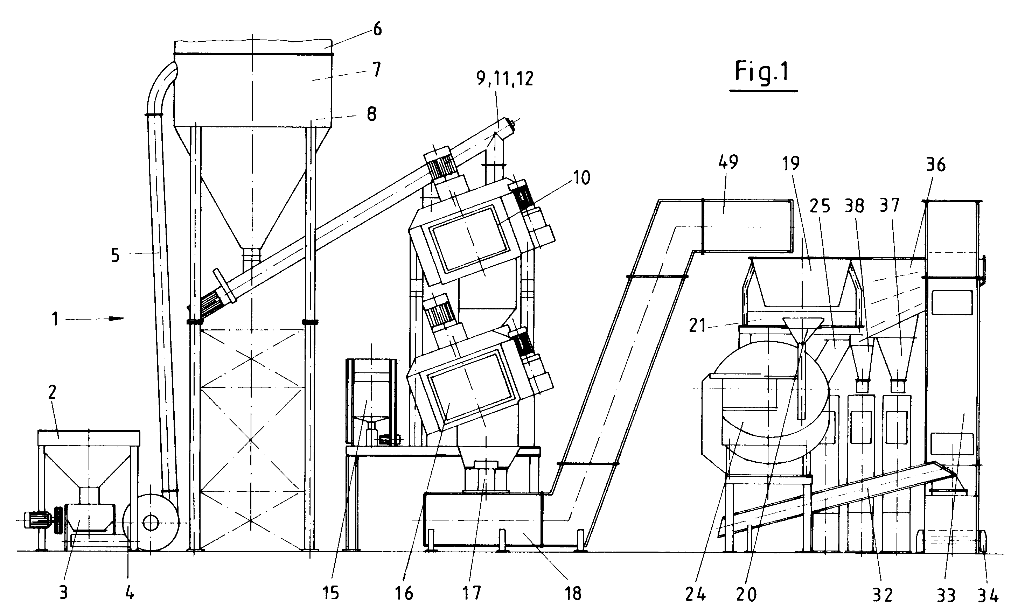

Die in Fig. 1 wiedergegebene Granulieranlage 1 ist in einer hier nicht dargestellten Fabrikhalle o.ä. untergebracht. Es ist auch denkbar, sie durch ein Zelt vor der Umwelt bzw. insbesondere klimatischen Einflüssen so weit zu schützen, wie dies notwendig ist.

Die Rohbraunkohle wird beispielsweise vom Lkw oder einem sonstwie geeigneten Fahrzeug zunächst in den Aufgabebunker 2 gegeben, von wo die Rohbraunkohle in den Brecher 3 gelangt. Hier wird eine Zertrümmerung und Zerkleinerung erreicht, so daß die nachgeschaltete Mühle 4 nur noch eine entsprechende Feinstzerkleinerung vornehmen muß.

Von der Mühle 4 aus wird die feuchte, aber entsprechend weit zerkleinerte Rohbraunkohle über einen Luftförderer 5 in das Silo 6 transportiert.

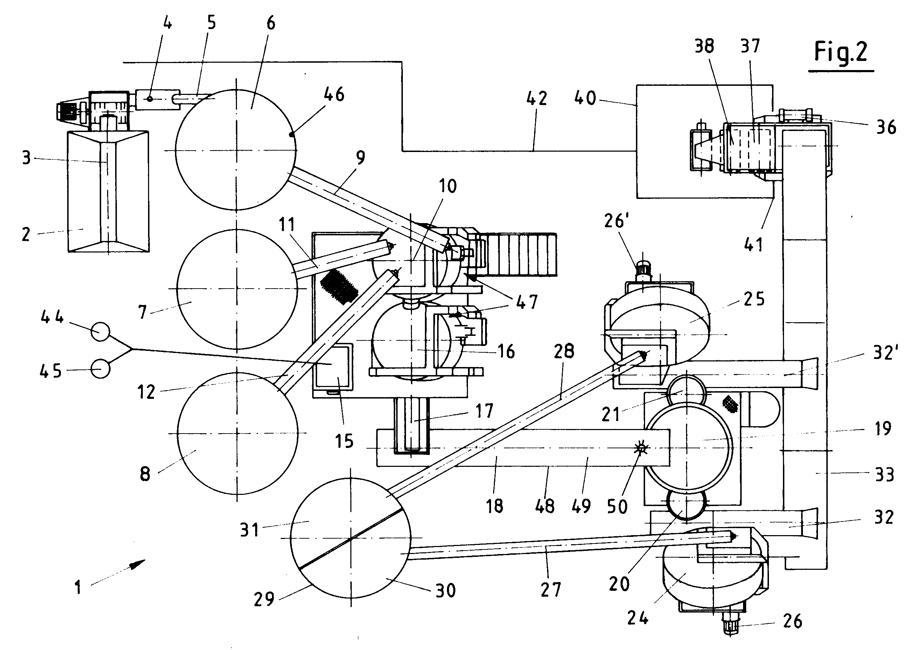

Fig. 2 verdeutlicht, daß neben dem Silo 6 auch das Silo 7 für Kalk und das Silo 8 für Gesteinsmehl angeordnet sind. Sie einzelnen Silos 6, 7, 8 verfügen normalerweise über das gleiche Volumen. Es ist aber auch denkbar, je nach der vorgegebenen Mengenaufteilung der einzelnen Komponenten auch die Silos 6, 7, 8 entsprechend zu bemessen.

Jedem der Silos 6, 7, 8 ist eine Förderschnecke 9, 11, 12 zugeordnet, über die das jeweilige Produkt der als Turbomischer ausgebildeten Waage 10 zugeführt wird. Über die Waage 10 erfolgt die gleichmäßige Dosierung der einzelnen Komponenten, so daß auch den jeweiligen Wünschen entsprechend die Mengenanteile verändert werden können. Insbesondere kann über das Silo 7 und die zugeordnete Förderschnecke 11 die Menge des zugegebenen Kalks dem jeweiligen Einsatzgebiet oder dem jeweiligen Kundenwunsch entsprechend verändert werden.

Die entsprechend eingestellten bzw. eingehaltenen Komponentenmengen werden dann in den als Pelletiertrommel 16 ausgebildeten Mischer 16' eingefüllt, wobei über die Wasserwaage 15 die Zugabe des benötigten Wassers oder der benötigten Flüssigkeit erfolgt. Daß es sich neben Wasser auch um andere Flüssigkeiten handeln kann, wird durch die Zuleitung verdeutlicht, die zu weiteren Tanks führt, wobei hier der Tank 44 für Gülle und der Tank 45 für Molke zu nennen sind.

Wasserwaage 15 und Waage 10 arbeiten zusammen bzw. Wasserwaage 15 und der Feuchtekühler 46 im Silo 6. Dadurch kann die für die Herstellung des Pellets notwendige Feuchte genau vorgegeben werden und die für die Bildung des Pellets notwendigen Feuchtigkeitstropfen werden gezielt erzeugt und bilden den Ausgangspunkt für die gewünschten Pellets, die dann als dunkle und feuchte Pellets über das Förderband 17 dem Kastenbeschicker 18 zugeführt werden.

Der Kastenbeschicker 18 ist in der Regel ein Förderband mit Lamellen, so daß die aufgelegten Pellets beim Aufwärtstransport nicht wieder zurückrollen können. Das Material wird dann über den Kastenbeschicker 18 einem Dosierteller 19 übergeben, der die Aufgabe hat, die ankommenden Pellets über die Auslauftrichter 20, 21 einzelnen Pelletiertellern 24, 25 in gleicher Menge jeweils zuzuführen.

Die Pelletierteller 24, 25 verfügen über eigene Antriebe 26, wobei diese Antriebe 26, 26' so eingestellt und reguliert werden, daß die einzelnen Pelletierteller 24, 25 möglichst immer die gleiche Umdrehungsgeschwindigkeit haben.

Auf den Pelletiertellern 24, 25 werden nun die entsprechend optimierten Pellets hergestellt, die dann mit einer Umhüllung aus Kalkmehl bzw. trockenem Kalk versehen werden. Hierzu enden Puderschnecken 27, 28 jeweils oberhalb der Pelletierteller 24, 25. Die auf den Pelletiertellern 24, 26 liegenden dunklen und feuchten Pellets werden nun mit trockenem Kalk bestäubt, so daß entsprechend sich verdickende Pellets erzeugt werden, die zwangsweise eine entsprechende Umhüllung aus Kalk erhalten. Der trockene Kalk nimmt die Feuchtigkeit aus dem einzelnen Pellet, verbindet sich mit dem Wasser und bildet so eine kompakte Hülle um das jeweilige Pellet.

Die beiden Puderschnecken 27, 28 gehen vom Silo 29 für Muschelkalk aus, daß im vorliegenden Fall als Doppelkammersilo ausgebildet ist, was Fig. 2 verdeutlicht. Je eine Kammer 30, 31 ist mit dem zugeordneten Pelletierteller 24, 25 bzw. der Puderschnecke 27, 28 verbunden.

Die den Pelletiertellern 24, 25 verlassenden mit Kalkmantel versehenen Pellets fallen auf das Förderband 32 und werden von diesem in den Kastenschicker 33 gebracht, um hier auf Höhe der nachgeschalteten Klassiereinrichtung gebracht zu werden. Der Kastenschicker 33 verfügt über einen Antrieb 34.

Zum Klassieren der Pellets dient eine Siebmaschine 36, deren Siebdeck elektrisch beheizt wird und zwei einstellbare Unwuchtmotoren sowie eine integrierte Aufgabenteilung mit Materialbremse, ebenfalls intergrieter pneumatischer Siepspannrichtung mit Reinigungseffekt aufweist, an die sich eine Absackanlage 37 mit speziell ausgelegter Luft-Dosier- und Fördereinrichtung (materialschonend) mit verteilendem Auslauftrichter 38 anschließt.

Der Überlauf 40 der Siebmaschine 36 und der Feinstkorndurchlauf 41 werden einem Förderband 42 übergeben, das die beiden Komponenten, die sich für den Verkauf nicht eignen, zur Mühle 4 transportiert. Hier werden diese beiden Komponenten erneut aufgeschlossen und dem Materialstrom wieder zugeführt, wobei sich der relativ hohe Kalkgehalt als durchaus positiv für das Gesamtprodukt herausstellt. Man muß allerdings berücksichtigen, daß die Prozente an Überkorn relativ gering sind, wenn die Anlage genau betrieben wird.

Weiter vorn ist bereits darauf hingewiesen worden, daß neben Wasser auch Gülle und Molke o.a. Anreger aus entsprechenden Tanks 44 für Gülle und Tanks 45 für Molke entnommen und über die Wasserwaage 15 in den Prozeß eingeführt werden können. Diese Flüssigkeiten übernehmen die Funktionen des Wasser oder ergänzen sie, so daß sie vorteilhaft gleichmäßig in die Pellets eingebunden werden können, um dann beim Auflösen der Kalkschicht auch entsprechend gleichmäßig in den Boden eingebracht zu werden.

Um auch gezielt Samenkörner gleich in diese Granulate bzw. Pellets einbinden zu können, ist der Pelletiertrommel 16 ein Samenvereinzelner 47 zugeordnet. Dieser Samenvereinzelner kann aus den unterschiedlichen Samenbehältern 51, 52 entnomme Samenkörner gleichmäßig auf die Pelletiertrommel 16 geben, so daß sie entsprechend in die einzelnen Pellets eingebunden werden können.

Der Kastenbeschicker 18 kann vorteilhaft für die genaue Einstellung der Pellets mitbenutzt werden, wenn er ein entsprechend dichtes Gehäuse 48 aufweist. Dieses Gehäuse 48 verfügt zusätzlich im Horizontalstück 49 über einen Vernebler 50, so daß hier noch einmal Feuchtigkeit gezielt zugeführt werden kann. Entsprechendes verdeutlicht Fig. 2.

Alle genannten Merkmale, auch die den Zeichnungen allein zu entnehmenden, werden allein und in Kombination als erfindungswesentlich angesehen.

## Patentansprüche

1. Verfahren zur Herstellung eines Mehrphasendüngemittels aus Magmagestein, Rohbraunkohle und Kalk, wobei die einzelnen Komponenten gemahlen, vermischt und dann unter Zugabe des Kalkes pelletiert werden und bei dem die Pellets anschießend getrocknet werden,
**dadurch gekennzeichnet**,
daß die Rohbraunkohle unter Erhalt des natürlichen Wassergehaltes erst unmittelbar vor dem Mischen gemahlen und anschließend unter Zumischung von gemahlenem Magmagestein und auch schon von Kalk mit über 30 Gew.-% zu dunklen, feuchten Pellets geformt wird, woraufhin diese Pellets ihre Form erhaltend einem Pelletierteller übergeben und dort bis zum Eintreten eines Trocknungseffektes mit trockenem Kalk bestäubt werden.

2. Verfahren nach Anspruch 1,
**dadurch gekennzeichnet**,
daß zur Gewährleistung einer gleichmäßigen Durchfeuchtung und insbesondere eines feuchten Außenmantels der Wassergehalt kontinuierlich überwacht und durch Zugabe von Wasser, Molke, Gülle oder Anregesubstrat während des Mischens und/oder der Förderung zum Bestäuben eingestellt wird.

3. Verfahren nach Anspruch 1,
**dadurch gekennzeichnet**,
daß bei der Formung der dunklen, feuchten Pellets vorher vereinzelte Samen zugeführt werden.

4. Verfahren nach Anspruch 1 - Anspruch 3,
**dadurch gekennzeichnet**,
daß zur Erreichung des Trocknungseffektes trockener, Muschelkalk unter gleichzeitigem Pelletieren auf die Pellets aufgestäubt wird.

5. Verfahren nach Anspruch 1 - Anspruch 4,
**dadurch gekennzeichnet**,
daß die dunklen, feuchten Pellets einerseits und der zum Trocknen verwendete Kalk andererseits gegen die Atmosphäre abgeschlossen transportiert werden.

6. Verfahren nach Anspruch 1,
**dadurch gekennzeichnet**,
daß auch der Wassergehalt der Rohbraunkohle im Silo überwacht wird.

7. Verfahren nach Anspruch 1 - Anspruch 6,
**dadurch gekennzeichnet**,
daß die vorgegebene Mischung über eine als Turbomischer ausgelegte und variabel zu beschickende Waage eingehalten wird.

8. Verfahren nach Anspruch 1 - Anspruch 7,
**dadurch gekennzeichnet**,
daß den Pellets Feuchtigkeit während der Zwischenförderung über Vernebeln zugegeben wird.

9. Verfahren nach Anspruch 1 - Anspruch 8,
**dadurch gekennzeichnet**,
daß die Pellets nach dem Trocknen mit Kalk abgesiebt werden, wobei in Auslaufkorn, Überkorn und Feinstkorn getrennt wird und das Überkorn und auch das Feinstkorn zerkleinert und als Ausgangsprodukt eingesetzt werden.

## Claims

1. Process for producing a multiphase fertiliser from magmatic rock, raw lignite and lime, in which the individual components are ground, mixed and then pelletised with the addition of lime and in which the pellets are subsequently dried, characterised in that the raw lignite is only ground directly before mixing retaining its natural water content and subsequently with the addition of ground magmatic rock and also of lime at over 30 % by wt. is formed into dark, moist pellets, after which said pellets retaining their shape are transferred to a pelletising disc and are dusted over with dry lime until the appearance of a drying effect.

2. Process according to claim 1, characterised in that to ensure a uniform moistening and in particular a moist outer casing the water content is continually monitored and is adjusted by the addition of water, whey, slurry or activation substrate during mixing and/or transfer to dusting.

3. Process according to claim 1, characterised in that on the formation of dark, moist pellets previously separated seeds are added.

4. Process according to claim 1 - claim 3, characterised in that to obtain the drying effect dry, shell lime is dusted over the pellets with simultaneous pelletising.

5. Process according to claims 1 - claim 4, characterised in that the dark moist pellets on the one hand and the lime used for drying on the other hand are transported sealed off from the atmosphere.

6. Process according to claim 1, characterised in that the water content of the raw lignite is also monitored in the silo.

7. Process according to claim 1 - claim 6, characterised in that the given mixture is maintained by a balance designed as a turbine mixer and able to be loaded variably.

8. Process according to claim 1 - claim 7, characterised in that moisture is added to the pellets during the intermediate transport by nebulisation.

9. Process according to claim 1 - claim 8, characterised in that the pellets are sieved with lime after drying whereby the output material, oversize material and fine material are separated and the oversize material and also the fine material are shredded and used as the starting product.

## Revendications

1. Procédé pour la fabrication d'engrais à phases multiples à partir de la roche de magma, de la lignite brute et de la chaux, dans lequel les composantes individuelles sont moulues, mélangées et ensuite mises sous formes de boulettes tout en y ajoutant de la chaux et dans lequel les boulettes sont ensuite séchées, caractérisé en ce que la lignite est seulement moulue immédiatement avant l'étape de mélange tout en conservant le taux d'humidité naturelle, et en ce qu'elle est ensuite transformée en boulettes foncées et humides tout en la mélangeant avec de la roche de magma moulue et également avec de la chaux à un pourcentage supérieur a 30% en poids, et puis, les boulettes sont transférées à un plateau de boulettes tout en conservant leur forme et y sont saupoudrées avec de la chaux sèche jusqu'a l'apparition d'un effet de séchage.

2. Procédé selon la revendication 1, caractérisé en ce que, pour assurer une pénétration régulière de l'humidité et notamment une enveloppe externe humide, le taux d'humidité est surveillé en continu et est régulé par l'addition de l'eau, de petit-lait, de lisier ou d'un substrat d'activation lors du mélange et/ou du transfert pour le saupoudrage.

3. Procédé selon la revendication 1, caractérisé en ce que lors de la formation des boulettes foncées et humides, des grains de semence dépariés préalablement sont amenés.

4. Procédé selon l'une quelconque des revendications 1 à 3, caractérisé en ce que, pour l'obtention d'un effet de séchage, de la chaux sèche de moule est saupoudrée sur les boulettes lors de la formation de celles-ci.

5. Procédé selon l'une quelconque des revendications 1 a 4, caractérisé en ce que les boulettes foncées et humides d'une part et la chaux utilisée pour le séchage d'autre part sont transportées de façon isolée de l'atmosphère.

6. Procédé selon la revendication 1, caractérisé en ce que le taux d'humidité de la lignite dans le silo est surveillé.

7. Procédé selon l'une quelconque des revendications 1 à 6, caractérisé en ce que le mélange prédéfini est respecté au moyen d'une balance réalisée sous la forme d'un turbo-mélangeur et pouvant être alimentée de façon variable.

8. Procédé selon l'une quelconque des revendications 1 à 7, caractérisé en ce que de l'humidité est ajoutée aux boulettes par vaporisation lors du transfert intermédiaire.

9. Procédé selon l'une quelconque des revendications 1 à 8, caractérisé en ce qu'après le séchage avec de la chaux, les boulettes sont criblées, en les séparant en grain de sortie, grain déclassés supérieurs et grain déclassés inférieurs, les grains déclassés supérieurs et inférieurs étant broyés et utilisés comme produit de départ.
